# EUROPEAN PATENT APPLICATION

(11) **EP 3 579 018 A1**
(43) Date of publication of application: **11.12.2019**
(21) Application number: 19177511.3
(22) Date of filing: 30.05.2019
(51) Int. Cl.: G01S 13/87, G01S 13/93

(54) **DUAL USE TRANSPONDER WITH RADAR MODE FOR CLOSE FORMATION FLYING**

(30) Priority: 08.06.2018 US 201816003445
(71) Applicant: BAE SYSTEMS Information and Electronic Systems Integration Inc., Nashua, NH 03061-0868 (US)
(72) Inventor: EKHAUS, Ira B, Nashua, NH 03061-0868. (US); LIMARDO, James, Nashua, NH 03061-0868. (US); RINGLEN, David C, 03061-0868., NH (US)
(74) Representative: BAE SYSTEMS plc Group IP Department

(57) **Abstract**

Techniques are provided for implementing a dual use transponder with a radar mode for collision avoidance. A methodology implementing the techniques according to an embodiment includes detecting a transmission window of the transponder of a first aircraft, the window defining a time period between transmission of Identification Friend or Foe (IFF) messages. The method further includes transmitting, by the transponder, a radar pulse during that window. Parameters of the radar pulse are selected to avoid false detection of the radar pulse as one of the IFF messages. The method further includes receiving a reflection of the radar pulse from a second aircraft during the window, the second aircraft within a region surrounding the first aircraft, and estimating a range from the first aircraft to the second aircraft based on a time delay between the transmission of the radar pulse and the reception of the reflection of the radar pulse.

## Description

### FIELD OF DISCLOSURE

The present disclosure relates to collision avoidance systems, and more particularly, to a dual use radar mode IFF (identification friend or foe) transponder for improved collision avoidance in close formation flying.

### BACKGROUND

Aircraft transponders transmit messages, sometimes referred to as Identification Friend or Foe (IFF) messages, which provide information about the location of the aircraft for use in air traffic control systems and terminal surveillance, for example to assist with routing and to provide situational awareness to reduce the chance of collision. These transponders typically have relatively low refresh rates, however, for example on the order of once or twice per second. The resulting latency creates an uncertainty bubble associated with the position of the aircraft which is typically too large to provide adequate safety for close formation flight, and can result in an unacceptably large number of false alarms and missed detections. Such transponder systems are simply not designed for, and are therefore unsuitable, to support close-in formation or rendezvous flight scenarios.

### BRIEF DESCRIPTION OF THE DRAWINGS

Features and advantages of embodiments of the claimed subject matter will become apparent as the following Detailed Description proceeds, and upon reference to the Drawings, wherein like numerals depict like parts.
Figure 1 illustrates a deployment of helicopters utilizing a dual use transponder system, configured in accordance with an embodiment of the present disclosure.
Figure 2 is a block diagram of the dual use transponder system, configured in accordance with an embodiment of the present disclosure.
Figure 3 is a plot of signal transmissions illustrating transponder mode transmissions and radar mode transmissions, in accordance with an embodiment of the present disclosure.
Figure 4 is a flowchart illustrating a methodology for operation of a dual use transponder system, in accordance with an embodiment of the present disclosure.
Figure 5 is another block diagram schematically illustrating a dual use transponder system, in accordance with an embodiment of the present disclosure.

Although the following Detailed Description will proceed with reference being made to illustrative embodiments, many alternatives, modifications, and variations thereof will be apparent to those skilled in the art.

### DETAILED DESCRIPTION

Dual use transponders are disclosed which provide a radar mode that enables more accurate and timely range detection to other aircraft for improved collision avoidance in close formation flight scenarios. These dual use transponders are configured to transmit and receive one or more radar pulses, when operating in the radar mode, to provide relatively accurate determination of range and velocity of other aircraft that may be intruding into a selected or otherwise pre-established proximity zone about a host aircraft (an aircraft employing the dual use transponder). These radar pulses are transmitted and received in conjunction with standard IFF transponder messages, in a manner that avoids cross-interference, as will be explained in greater detail below. The disclosed dual use transponders and techniques increase the host ship (or so-called own-ship) situational awareness by alerting the pilot to other nearby aircraft that pose potential air-to-air collision threats. The radar mode of the dual use transponders augments the existing situational awareness information provided by the IFF transponder messages for close-in aircraft by reducing their position uncertainty error at a higher update rate.

The disclosed dual use transponders can be employed, for example, in an aircraft such as a helicopter or a refueling plane, although any number of other applications where there is a need for close formation flying will be apparent. In accordance with an embodiment, a methodology to implement these techniques includes detecting a transmission window of the transponder of the host aircraft (own-ship). The window is associated with or defines a time period between transmission of standard IFF messages by the transponder. The method further includes transmitting, by the transponder, a radar pulse during that window. Parameters of the radar pulse are selected to avoid false detection of the radar pulse as one of the IFF messages and to minimize or otherwise reduce any cross-interference with Air Traffic Control (ATC) signals. For example, the power level and pulse width of the radar pulse are restricted to relatively small values, as will be explained below. The method further includes receiving a reflection of the radar pulse from a second nearby aircraft during the window, if the second aircraft is intruding into a selected proximity region surrounding the host aircraft. The method further includes estimating a range from the host aircraft to the second aircraft based on a time delay between the transmission of the radar pulse and the reception of the reflection of the radar pulse. The need for evasive maneuvering can thus be signaled based on a range threshold being crossed (indicating the second plane is too close).

As will be appreciated in light of this disclosure, the dual use transponders described herein can be used to allow for improved range detection to other aircraft, compared to existing methods that rely on the reception and decoding of IFF transponder messages which are associated with relatively large uncertainty bubbles due to their inherent latency and position source errors. The disclosed dual use transponders may therefore be more suitable for use in a variety of applications such as, for example, close formation flying, in-air refueling, short range maneuvering, rendezvous, performance flying, and certain tactical flight maneuvers. The disclosed dual use transponder methodology can be implemented in a relatively efficient manner by, for example, modifying existing transponder systems and reusing portions of the existing radiofrequency (RF) hardware in those systems. In some embodiments, IFF message processing and radar pulse processing may be performed by processors and circuits of existing transponder systems such that no additional sensor or electronics unit is required to implement the radar mode, making this a cost-effective solution. In such cases, firmware or software upgrades can be made to utilize the given hardware as variously described herein. Any number of non-transitory machine-readable mediums (e.g., embedded memory, on-chip memory, read only memory, random access memory, solid state drives, and any other physical storage mediums) can be used to encode the instructions that, when executed by one or more processors, cause the techniques provided herein to be carried out.

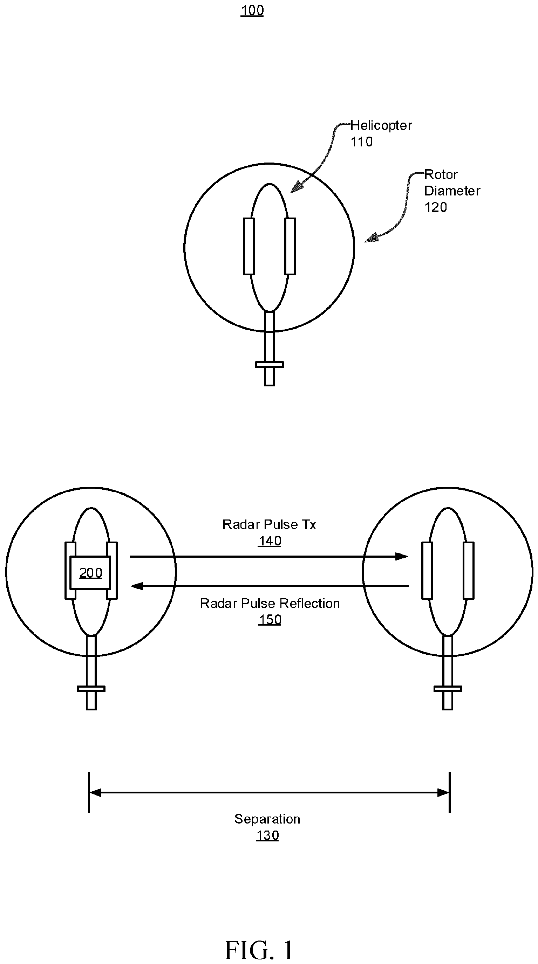

Figure 1 illustrates a deployment 100 of helicopters with a dual use transponder 200, configured in accordance with an embodiment of the present disclosure. Three helicopters 110 are shown in a close flight formation scenario. Each helicopter has a rotor diameter 120, which may typically be on the order of 10-20 meters. A minimum separation distance 130 is established for safe flight, to avoid or reduce the possibility of collision. In some cases, such as, for example formation flying, the minimum separation distance may be chosen as 50 meters (approximately three rotor diameters) to achieve an acceptable level of risk. Existing detection based on IFF transponder messages transmitted at one second intervals can allow an intruding aircraft to travel between 55 and 150 meters of distance between updates which is unacceptable.

As shown in this illustration, at least one of the helicopters is equipped with a dual use transponder 200, configured to transmit radar pulses 140 and receive the reflections 150 from another helicopter that is in close proximity, for determination of the range (and thus separation), as will be described in greater detail below.

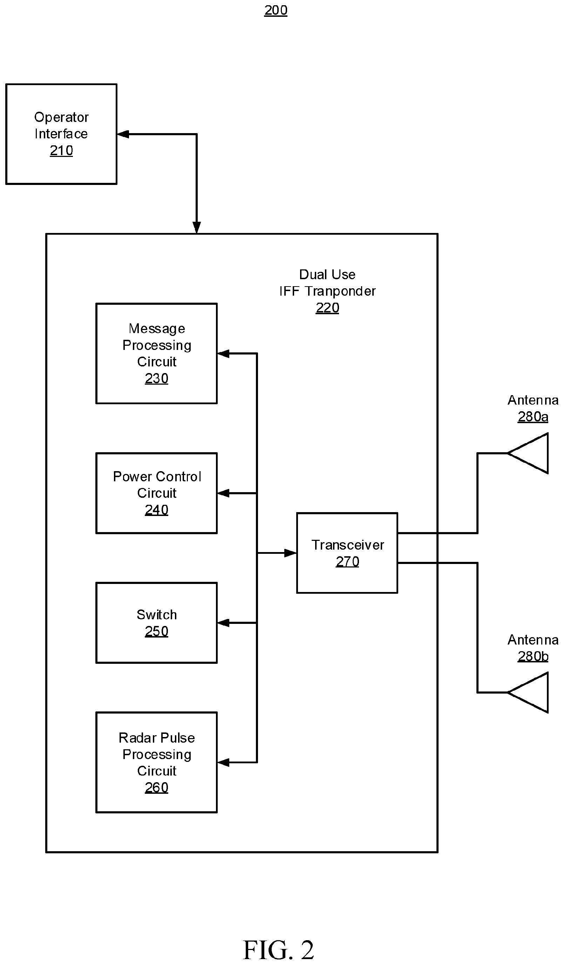

Figure 2 is a block diagram of the dual use transponder 200, configured in accordance with an embodiment of the present disclosure. The dual use transponder is shown to include a message processing circuit 230, a power control circuit 240, a switch 250, a radar pulse processing circuit 260, and a transceiver 270. Also shown, coupled to the transponder 220 are operator interface 210, and antennas 280.

The message processing circuit 230 is configured to generate IFF messages associated with the host (own-ship) aircraft, also referred to herein as the first aircraft. The IFF messages may conform to existing or future message formats including, for example, Automatic Dependent Surveillance-Broadcast (ADS-B) and Mode 5 Level 2-Broadcast (M5L2-B).

The transceiver 270 is configured to transmit the IFF messages from the host aircraft through antennas 280. The IFF messages may thus be received by other aircraft in the area, terminal facilities, traffic control facilities, and any other interested parties. In some embodiments, however, the IFF messages may be encrypted to prevent eavesdropping by unintended recipients in certain applications where security may be a consideration.

The radar pulse processing circuit 260 is configured to generate a radar pulse. The parameters of the radar pulse are selected to avoid false detection (e.g., confusion) of the radar pulse with the IFF or ATC messages. In some embodiments, for example, the peak radar pulse power may be limited to one watt or less, and the pulse width may be restricted to 100 nanosecond (ns) or less. Power control circuit 240 is configured to dynamically adjust the transmit output power between normal transmit power for the IFF messages and the lower power mode for the radar pulse.

The transceiver 270 is further configured to transmit the radar pulse during an IFF message transmission window. That is to say, the transmission window is associated with a time period between the transmission of the IFF messages, when the transceiver is available to operate in the radar mode of the dual use transponder.

The transceiver 270 is further configured to receive a reflection of the radar pulse, through antennas 280, from a second (intruding) aircraft during the transmission window, if the second aircraft is located within a selected proximity region surrounding the first aircraft. In some embodiments, the selected region may be limited to a spherical volume of radius 1500 meters, centered about the host aircraft. Switch 250 is configured to switch the transceiver 270 between transmit and receive modes. In some embodiments, the transceiver 270 may be switched from transmit to receive mode in 200 ns or less to receive the return radar pulse echo (reflection) and allow for detection of the second aircraft within 30 meters of the host aircraft. In some embodiments, transceiver 270 may also include RF components such as amplifiers, low-noise amplifiers, filters, matched filters, and the like. In some embodiments, the transceiver is configured to transmit and receive messages and radar pulses in the L-band of the RF frequency spectrum (e.g., 500 to 1500 MHz), and in particular, in the 1030-1090 MHz bands.

The radar pulse processing circuit 260 is further configured to estimate a range from the first aircraft to the second aircraft based on a time delay between the transmission of the radar pulse and the reception of the reflection of the radar pulse, or using other known techniques in light of the present disclosure. In some embodiments, the radar pulse processing circuit 260 is further configured to estimate a closing velocity between the first aircraft and the second aircraft based on a measured Doppler shift of the reflected radar pulse, or using other known techniques in light of the present disclosure.

In some embodiments, the radar pulse processing circuit 260 is further configured to cause the transceiver to re-transmit the radar pulse as a sequence of radar pulses at a pulse repetition interval (PRI) in the range of 9 µs to 11 µs, which allows for signal integration for improved pulse detection and also supports a maximum unambiguous range of 1500 meters. The PRI may also be staggered in time to eliminate false returns caused by second time around echoes. In some embodiments, the transceiver may employ a matched filter to improve detection of the received radar pulses.

In some embodiments, antenna 280 may comprise two omnidirectional antennas 280a and 280b, one deployed above the aircraft, the other deployed below the aircraft. Radar pulse transmissions may be toggled between the two antennas to provide 360-degree spherical coverage. In some embodiments, additional antennas (e.g., more than two) may be employed and may be configured with any suitable beam pattern.

Operator (pilot) interface 210 is configured to receive information from the dual use IFF transponder 220 and to display a warning signal to the pilot of the host aircraft. In some embodiments, the warning signal may include the detection of the second aircraft within the selected proximity region and the estimated range to that second aircraft. The warning signal may include audio, visual, and/or tactile alerts to notify the pilot of nearby and potentially conflicting air-traffic.

In some embodiments, the radar pulse mode of operation may be activated in response to the detection of an intruding aircraft in the selected proximity region, and otherwise remain disabled to further reduce the possibility of confusion between the radar pulses and the transponder messages. The initial detection of such an intruding aircraft into the selected proximity region may be based on the reception and decoding of IFF messages from the transponder of the intruding aircraft. Operator/pilot action is not required to enable activation of the radar pulse mode of operation, although, in some embodiments the capability to disable radar pulse mode may be provided.

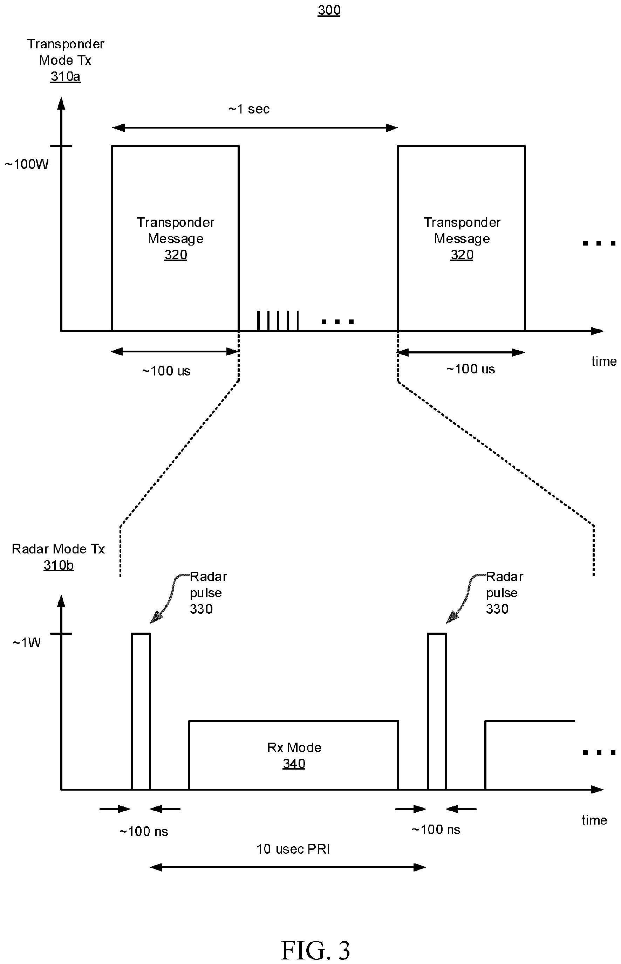

Figure 3 is a plot of signal transmissions 300 illustrating transponder mode transmissions 310a and radar mode transmissions 310b, in accordance with an embodiment of the present disclosure. Note that the illustration is not drawn to scale, but rather is intended to show the relative order and arrangement of messages and signals. In transponder mode 310a, transponder messages 320 are shown to be transmitted periodically, for example roughly on the order of once or twice per second. The transponder messages 320 are transmitted at a relatively high-power level, for example on the order of 100s of watts. The transponder message is a digitally encoded bitstream that includes, for example, information such as the aircraft ID, location, and velocity. The duration of each transponder message may be on the order of approximately 100 µs.

As previously described, the transponder may switch to radar mode transmissions 310b in the period of time between transponder messages, if intruder aircraft are known or expected to be in the vicinity. This is shown in the lower half of Figure 3 through a dotted line expansion of the time axis. Radar pulses 330 are shown to be transmitted in radar mode at a power level on the order of one watt and at a pulse width on the order of 100 ns. These parameters are chosen to reduce the probability of confusion of the radar pulses 330 with transponder messages 320, while maintaining the ability to detect reflections of the radar pulses off of the intruder aircraft. In some embodiments, the radar pulses may be retransmitted at a pulse repetition interval (PRI), for example on the order of 10 µs. The transponder may switch into a receive mode 340 in the time period between radar pulse transmissions, during which reflections of the radar pulses may be received, as previously described, although IFF signals may also be received during this period.

### Methodology

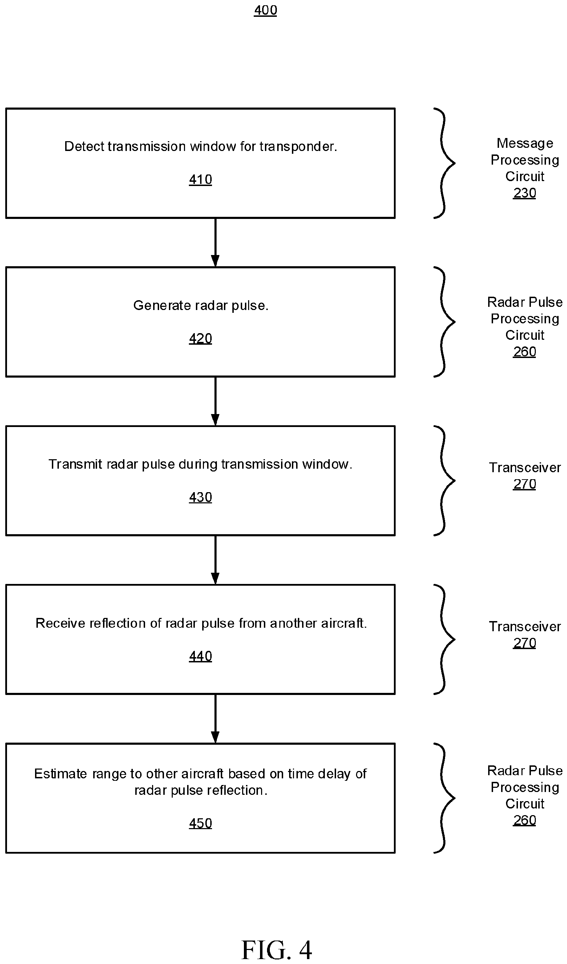

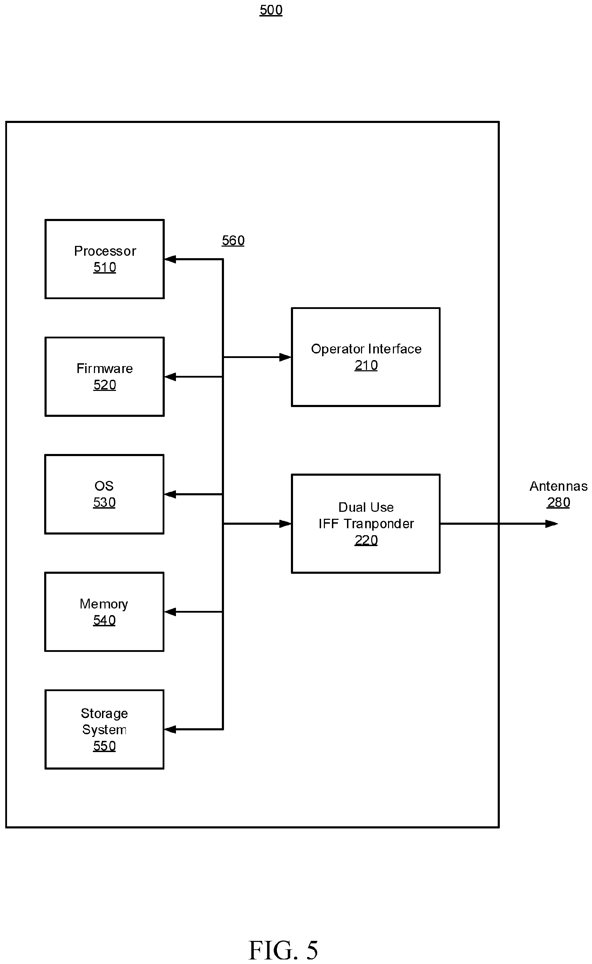

Figure 4 is a flowchart illustrating an example method 400 for operation of a dual use transponder with radar mode for improved collision avoidance, in accordance with an embodiment of the present disclosure. As can be seen, the example method includes a number of phases and sub-processes, the sequence of which may vary from one embodiment to another. However, when considered in the aggregate, these phases and sub-processes form a process for operation of a dual use transponder for collision avoidance in accordance with certain of the embodiments disclosed herein. These embodiments can be implemented, for example using the system architecture illustrated in Figures 2 and 5, as described herein. However other system architectures can be used in other embodiments, as will be apparent in light of this disclosure. To this end, the correlation of the various functions shown in Figure 4 to the specific components illustrated in Figures 2 and 5 is not intended to imply any structural and/or use limitations. Rather other embodiments may include, for example, varying degrees of integration wherein multiple functionalities are effectively performed by one system. For example, in an alternative embodiment a single module can be used to perform all of the functions of method 400. Thus, other embodiments may have fewer or more modules and/or sub-modules depending on the granularity of implementation. In still other embodiments, the methodology depicted can be implemented as a computer program product including one or more non-transitory machine-readable mediums that when executed by one or more processors cause the methodology to be carried out. Numerous variations and alternative configurations will be apparent in light of this disclosure.

As illustrated in Figure 4, in one embodiment method 400 commences by detecting, at operation 410, a transmission window associated with the dual use transponder system of the host aircraft. The transmission window is associated with a time period between transmission of IFF messages by the transponder system.

Next, at operation 420, a radar pulse is generated. The parameters of the radar pulse are selected to avoid false detection (e.g., confusion) of the radar pulse with one of the IFF or ATC messages. In some embodiments, for example, the peak power level of the radar pulse may be restricted to one watt or less, and the pulse width may be restricted to 100 ns or less. At operation 430, The radar pulse is transmitted during the transmission window to avoid cross-interference with the IFF messages.

At operation 440, a reflection of the radar pulse is received from a second aircraft during the transmission window. The second aircraft is located within a selected proximity region surrounding the first aircraft. In some embodiments, the selected region may be limited to a spherical volume of radius 1500 meters, centered about the host aircraft. At operation 450, a range is estimated from the first aircraft to the second aircraft based on a time delay between the transmission of the radar pulse and the reception of the reflection of the radar pulse.

Of course, in some embodiments, additional operations may be performed, as previously described in connection with the system. These additional operations may include, for example, limiting the transmission of radar pulses to periods of time when the dual use transponder is operating in a radar mode, the radar mode being activated upon determination that the second aircraft is within the selected proximity region based on information obtained from IFF messages transmitted by the second aircraft. Additionally, in some embodiments, a warning signal may be displayed to the pilot of the host aircraft. The warning signal may include the detection of the second aircraft within the selected proximity region and the estimated range to the second aircraft.

### Example Platform

Figure 5 illustrates an example aircraft platform 500 comprising a dual use IFF transponder 220 and supporting components, configured in accordance with certain of the embodiments disclosed herein. In some embodiments, aircraft platform 500 may be a helicopter, a refueling aircraft, or any other type of aircraft configured for close formation flying. Any combination of different devices may be used in certain embodiments.

In some embodiments, platform 500 may comprise any combination of a processor 510, a memory 540, a storage system 550, an operator (pilot) interface 210, dual use IFF transponder 220, and antennas 280. As can be further seen, a bus and/or interconnect 560 is also provided to allow for communication between the various components listed above and/or other components not shown. Other componentry and functionality not reflected in the block diagram of Figure 5 will be apparent in light of this disclosure, and it will be appreciated that other embodiments are not limited to any particular hardware configuration.

Processor 510 can be any suitable processor, and may include one or more coprocessors or controllers, such as an audio processor, a graphics processing unit, or hardware accelerator, to assist in control and processing operations associated with platform 500. In some embodiments, the processor 510 may be implemented as any number of processor cores. The processor (or processor cores) may be any type of processor, such as, for example, a micro-processor, an embedded processor, a digital signal processor (DSP), a graphics processor (GPU), a network processor, a field programmable gate array or other device configured to execute code. The processors may be multithreaded cores in that they may include more than one hardware thread context (or "logical processor") per core. Processor 510 may be implemented as a complex instruction set computer (CISC) or a reduced instruction set computer (RISC) processor.

Memory 540 can be implemented using any suitable type of digital storage including, for example, flash memory and/or random access memory (RAM). In some embodiments, the memory 540 may include various layers of memory hierarchy and/or memory caches as are known to those of skill in the art. Memory 540 may be implemented as a volatile memory device such as, but not limited to, a RAM, dynamic RAM (DRAM), or static RAM (SRAM) device. Storage system 550 may be implemented as a non-volatile storage device such as, but not limited to, one or more of a hard disk drive (HDD), a solid-state drive (SSD), a universal serial bus (USB) drive, an optical disk drive, tape drive, an internal storage device, an attached storage device, flash memory, and/or a battery backed-up synchronous DRAM (SDRAM). In some embodiments, storage 550 may comprise technology to increase the storage performance enhanced protection for valuable digital media when multiple hard drives are included.

Processor 510 may be configured to execute an Operating System (OS) 530 which may comprise any suitable operating system, such as Google Android (Google Inc., Mountain View, CA), Microsoft Windows (Microsoft Corp., Redmond, WA), Apple OS X (Apple Inc., Cupertino, CA), Linux, or a real-time operating system (RTOS). As will be appreciated in light of this disclosure, the techniques provided herein can be implemented without regard to the particular operating system provided in conjunction with platform 500, and therefore may also be implemented using any suitable existing or subsequently-developed platform. Processor 510 may be configured to execute firmware 520.

It will be appreciated that in some embodiments, the various components of platform 500 may be combined or integrated in a system-on-a-chip (SoC) architecture. In some embodiments, the components may be hardware components, firmware components, software components or any suitable combination of hardware, firmware or software.

Dual use IFF transponder 220 is configured to transmit and receive IFF messages and radar pulses, in a manner that avoids cross-interference between the messages and the pulses, for collision avoidance in close formation flying, as previously described. Warning messages and range estimates may be displayed to the pilot of the aircraft platform through operator interface 210, in the event that other aircraft are detected to be intruding into the proximity region of the host aircraft. Dual use IFF transponder 220 may include any or all of the circuits/components illustrated in Figure 2, as described above. These components can be implemented or otherwise used in conjunction with a variety of suitable software and/or hardware that is coupled to or that otherwise forms a part of platform 500.

Various embodiments may be implemented using hardware elements, software elements, or a combination of both. Examples of hardware elements may include processors, microprocessors, circuits, circuit elements (for example, transistors, resistors, capacitors, inductors, and so forth), integrated circuits, ASICs, programmable logic devices, digital signal processors, FPGAs, logic gates, registers, semiconductor devices, chips, microchips, chipsets, and so forth. Examples of software may include software components, programs, applications, computer programs, application programs, system programs, machine programs, operating system software, middleware, firmware, software modules, routines, subroutines, functions, methods, procedures, software interfaces, application program interfaces, instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power level, heat tolerances, processing cycle budget, input data rates, output data rates, memory resources, data bus speeds, and other design or performance constraints.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still cooperate or interact with each other.

The various embodiments disclosed herein can be implemented in various forms of hardware, software, firmware, and/or special purpose processors. For example, in one embodiment at least one non-transitory computer readable storage medium has instructions encoded thereon that, when executed by one or more processors, cause one or more of the methodologies disclosed herein to be implemented. Other componentry and functionality not reflected in the illustrations will be apparent in light of this disclosure, and it will be appreciated that other embodiments are not limited to any particular hardware or software configuration. Thus, in other embodiments platform 500 may comprise additional, fewer, or alternative subcomponents as compared to those included in the example embodiment of Figure 5.

The aforementioned non-transitory computer readable medium may be any suitable medium for storing digital information, such as a hard drive, a server, a flash memory, and/or random access memory (RAM), or a combination of memories. In alternative embodiments, the components and/or modules disclosed herein can be implemented with hardware, including gate level logic such as a field-programmable gate array (FPGA), or alternatively, a purpose-built semiconductor such as an application-specific integrated circuit (ASIC). In some embodiments, the hardware may be modeled or developed using hardware description languages such as, for example Verilog or VHDL. Still other embodiments may be implemented with a microcontroller having a number of input/output ports for receiving and outputting data, and a number of embedded routines for carrying out the various functionalities disclosed herein. It will be apparent that any suitable combination of hardware, software, and firmware can be used, and that other embodiments are not limited to any particular system architecture.

Some embodiments may be implemented, for example, using a machine readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, process, or the like, and may be implemented using any suitable combination of hardware and/or software. The machine readable medium or article may include, for example, any suitable type of memory unit, memory device, memory article, memory medium, storage device, storage article, storage medium, and/or storage unit, such as memory, removable or non-removable media, erasable or non-erasable media, writeable or rewriteable media, digital or analog media, hard disk, floppy disk, compact disk read only memory (CD-ROM), compact disk recordable (CD-R) memory, compact disk rewriteable (CD-RW) memory, optical disk, magnetic media, magnetooptical media, removable memory cards or disks, various types of digital versatile disk (DVD), a tape, a cassette, or the like. The instructions may include any suitable type of code, such as source code, compiled code, interpreted code, executable code, static code, dynamic code, encrypted code, and the like, implemented using any suitable high level, low level, object oriented, visual, compiled, and/or interpreted programming language.

Unless specifically stated otherwise, it may be appreciated that terms such as "processing," "computing," "calculating," "determining," or the like refer to the action and/or process of a computer or computing system, or similar electronic computing device, that manipulates and/or transforms data represented as physical quantities (for example, electronic) within the registers and/or memory units of the computer system into other data similarly represented as physical quantities within the registers, memory units, or other such information storage transmission or displays of the computer system. The embodiments are not limited in this context.

The terms "circuit" or "circuitry," as used in any embodiment herein, are functional and may comprise, for example, singly or in any combination, hardwired circuitry, programmable circuitry such as computer processors comprising one or more individual instruction processing cores, state machine circuitry, and/or firmware that stores instructions executed by programmable circuitry. The circuitry may include a processor and/or controller configured to execute one or more instructions to perform one or more operations described herein. The instructions may be embodied as, for example, an application, software, firmware, or one or more embedded routines configured to cause the circuitry to perform any of the aforementioned operations. Software may be embodied as a software package, code, instructions, instruction sets and/or data recorded on a computer-readable storage device. Software may be embodied or implemented to include any number of processes, and processes, in turn, may be embodied or implemented to include any number of threads or parallel processes in a hierarchical fashion. Firmware may be embodied as code, instructions or instruction sets and/or data that are hard-coded (e.g., nonvolatile) in memory devices. The circuitry may, collectively or individually, be embodied as circuitry that forms part of a larger system, for example, an integrated circuit (IC), an application-specific integrated circuit (ASIC), a system-on-a-chip (SoC), desktop computers, laptop computers, tablet computers, servers, smart phones, and other processor-based or functional systems. Other embodiments may be implemented as software executed by a programmable control device. In such cases, the terms "circuit" or "circuitry" are intended to include a combination of software and hardware such as a programmable control device or a processor capable of executing the software. As described herein, various embodiments may be implemented using hardware elements, software elements, or any combination thereof. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth.

Numerous specific details have been set forth herein to provide a thorough understanding of the embodiments. It will be understood by an ordinarily-skilled artisan, however, that the embodiments may be practiced without these specific details. In other instances, well known operations, components and circuits have not been described in detail so as not to obscure the embodiments. It can be appreciated that the specific structural and functional details disclosed herein may be representative and do not necessarily limit the scope of the embodiments. In addition, although the subject matter has been described in language specific to structural features and/or methodological acts, it is to be understood that the subject matter defined in the appended claims is not necessarily limited to the specific features or acts described herein. Rather, the specific features and acts described herein are disclosed as example forms of implementing the claims.

### Further Example Embodiments

The following examples pertain to further embodiments, from which numerous permutations and configurations will be apparent.

One example embodiment of the present disclosure provides a method for aircraft collision avoidance. The method includes: detecting, by a processor-based system, a transmission window associated with a transponder system of a first aircraft, the transmission window associated with a time period between transmission of Identification Friend or Foe (IFF) messages by the transponder system of the first aircraft; transmitting, by the transponder system of the first aircraft, a radar pulse during the transmission window, wherein parameters of the radar pulse are selected to avoid false detection of the radar pulse as one of the IFF messages or as an Air Traffic Control message; receiving, by the transponder system of the first aircraft, a reflection of the radar pulse from a second aircraft during the transmission window, the second aircraft within a selected region surrounding the first aircraft; and estimating, by the processor-based system, a range from the first aircraft to the second aircraft based on a time delay between the transmission of the radar pulse and the reception of the reflection of the radar pulse.

In some cases, the selected region surrounding the first aircraft is a spherical volume of radius 1500 meters. In some cases, the method further includes detecting that the second aircraft is within the selected region surrounding the first aircraft based on an IFF message transmitted by the second aircraft, and restricting transmissions of the radar pulse to periods of time when the second aircraft is within the selected region surrounding the first aircraft. In some cases, the radar pulse is transmitted with a peak power level less than or equal to one watt. In some cases, the radar pulse is transmitted with a pulse width less than or equal to 100 nanoseconds. In some cases, the method further includes re-transmitting the radar pulse as a sequence of radar pulses at a pulse repetition interval in the range of 9 microseconds to 11 microseconds. In some cases, the IFF messages and radar pulses are transmitted and received in the L-band of the frequency spectrum. In some cases, the method further includes estimating a closing velocity between the first aircraft and the second aircraft based on the received reflection of the radar pulse. In some cases, the aircraft is at least one of a helicopter and a refueling platform. In some cases, the method further includes displaying at least one of a warning signal and the estimated range to a pilot of the first aircraft on an operator interface.

Another example embodiment of the present disclosure provides a dual use transponder system. The dual use transponder system includes: a message processing circuit to generate Identification Friend or Foe (IFF) messages associated with a first aircraft; a transceiver to transmit the IFF messages from the first aircraft; a radar pulse processing circuit to generate a radar pulse, wherein parameters of the radar pulse are selected to avoid false detection of the radar pulse as one of the IFF messages or as an Air Traffic Control message; the transceiver further to transmit the radar pulse during a transmission window, the transmission window associated with a time period between the transmission of the IFF messages; the transceiver further to receive a reflection of the radar pulse from a second aircraft during the transmission window, the second aircraft within a selected region surrounding the first aircraft; and the radar pulse processing circuit further to estimate a range from the first aircraft to the second aircraft based on a time delay between the transmission of the radar pulse and the reception of the reflection of the radar pulse.

In some cases, the selected region surrounding the first aircraft is a spherical volume of radius 1500 meters. In some cases, the radar pulse processing circuit is further to detect that the second aircraft is within the selected region surrounding the first aircraft based on an IFF message transmitted by the second aircraft, and to restrict transmissions of the radar pulse to periods of time when the second aircraft is within the selected region surrounding the first aircraft. In some cases, the dual use transponder system further includes a power control circuit to limit the transmitted peak power level of the radar pulse to a maximum of one watt. In some cases, the radar pulse processing circuit is further to generate the radar pulse at a pulse width less than or equal to 100 nanoseconds. In some cases, the radar pulse processing circuit is further to cause the transceiver to re-transmit the radar pulse as a sequence of radar pulses at a pulse repetition interval in the range of 9 microseconds to 11 microseconds. In some cases, the transceiver is further to transmit and receive the IFF messages and radar pulses in the L-band of the frequency spectrum. In some cases, the radar pulse processing circuit is further to estimate a closing velocity between the first aircraft and the second aircraft based on the received reflection of the radar pulse. In some cases, the aircraft is at least one of a helicopter and a refueling platform. In some cases, the message processing circuit is further to display at least one of a warning signal and the estimated range to a pilot of the first aircraft on an operator interface.

Another example embodiment of the present disclosure provides a computer program product including one or more non-transitory machine-readable mediums encoded with instructions that when executed by one or more processors cause a process to be carried out for aircraft collision avoidance. The process includes: causing transmission, by a transponder system of a first aircraft, of a radar pulse during a transmission window associated with the transponder system of the first aircraft, the transmission window associated with a time period between transmission of Identification Friend or Foe (IFF) messages by the transponder system of the first aircraft, wherein a reflection of the radar pulse is received by the transponder system of the first aircraft from a second aircraft during the transmission window; and estimating a range from the first aircraft to the second aircraft based on a time delay between the transmission of the radar pulse and the reception of the reflection of the radar pulse.

In some cases, the process further includes determining that the second aircraft is within a region surrounding the first aircraft based on an IFF message transmitted by the second aircraft; and restricting transmissions of the radar pulse to periods of time when the second aircraft is within the region surrounding the first aircraft. In some cases, the process further includes causing retransmission of the radar pulse as a sequence of radar pulses at a pulse repetition interval in the range of 9 microseconds to 11 microseconds. In some cases, the process further includes estimating a closing velocity between the first aircraft and the second aircraft based on the received reflection of the radar pulse. In some cases, the process further includes causing display of at least one of a warning signal and the estimated range to a pilot of the first aircraft on an operator interface; and/or causing an evasive maneuver.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Accordingly, the claims are intended to cover all such equivalents. Various features, aspects, and embodiments have been described herein. The features, aspects, and embodiments are susceptible to combination with one another as well as to variation and modification, as will be understood by those having skill in the art. The present disclosure should, therefore, be considered to encompass such combinations, variations, and modifications. It is intended that the scope of the present disclosure be limited not by this detailed description, but rather by the claims appended hereto. Future filed applications claiming priority to this application may claim the disclosed subject matter in a different manner, and may generally include any set of one or more elements as variously disclosed or otherwise demonstrated herein.

The dual use transponder system, further comprising a power control circuit to limit the transmitted peak power level of the radar pulse to a maximum of one watt.

The dual use transponder system, wherein the radar pulse processing circuit is further to generate the radar pulse at a pulse width less than or equal to 100 nanoseconds.

The dual use transponder system, wherein the radar pulse processing circuit is further to cause the transceiver circuit to re-transmit the radar pulse as a sequence of radar pulses at a pulse repetition interval in the range of 9 microseconds to 11 microseconds.

The dual use transponder system, wherein the transceiver circuit is further to transmit and receive the IFF messages and radar pulses in the L-band of the frequency spectrum.

The dual use transponder system, wherein the radar pulse processing circuit is further to estimate a closing velocity between the first aircraft and the second aircraft based on the received reflection of the radar pulse.

The dual use transponder system, wherein the aircraft is at least one of a helicopter and a refueling platform.

## Claims

1. A processor-implemented method for aircraft collision avoidance, the method comprising:
detecting, by a processor-based system, a transmission window associated with a transponder system of a first aircraft, the transmission window associated with a time period between transmission of Identification Friend or Foe (IFF) messages by the transponder system of the first aircraft;
transmitting, by the transponder system of the first aircraft, a radar pulse during the transmission window, wherein parameters of the radar pulse are selected to avoid false detection of the radar pulse as one of the IFF messages or as an Air Traffic Control message;
receiving, by the transponder system of the first aircraft, a reflection of the radar pulse from a second aircraft during the transmission window, the second aircraft within a region surrounding the first aircraft; and
estimating, by the processor-based system, a range from the first aircraft to the second aircraft based on a time delay between the transmission of the radar pulse and the reception of the reflection of the radar pulse.

2. The method of claim 1, wherein the region surrounding the first aircraft is a spherical volume of radius 1500 meters.

3. The method of claim 1 or claim 2, further comprising detecting that the second aircraft is within the region surrounding the first aircraft based on an IFF message transmitted by the second aircraft, and restricting transmissions of the radar pulse to periods of time when the second aircraft is within the region surrounding the first aircraft.

4. The method of any one of the preceding claims, wherein the radar pulse is transmitted with a peak power level less than or equal to one watt.

5. The method of any one of the preceding claims, wherein the radar pulse is transmitted with a pulse width less than or equal to 100 nanoseconds.

6. The method of any one of the preceding claims, further comprising re-transmitting the radar pulse as a sequence of radar pulses at a pulse repetition interval in the range of 9 microseconds to 11 microseconds.

7. The method of any one of the preceding claims, wherein the IFF messages and radar pulses are transmitted and received in the L-band of the frequency spectrum.

8. The method of any one of the preceding claims, further comprising estimating a closing velocity between the first aircraft and the second aircraft based on the received reflection of the radar pulse.

9. The method of any one of the preceding claims, wherein the aircraft is at least one of a helicopter and a refueling platform.

10. The method of any one of the preceding claims, further comprising: displaying at least one of a warning signal and the estimated range to a pilot of the first aircraft on an operator interface; and/or signaling or causing an evasive maneuver.

11. A dual use transponder system comprising:
a message processing circuit to generate Identification Friend or Foe (IFF) messages associated with a first aircraft;
a radar pulse processing circuit to generate a radar pulse, wherein parameters of the radar pulse are selected to avoid false detection of the radar pulse as one of the IFF messages or as an Air Traffic Control message; and
a transceiver circuit to transmit the IFF messages from the first aircraft, and to transmit the radar pulse during a transmission window associated with a time period between the transmission of the IFF messages, and to receive a reflection of the radar pulse from a second aircraft during the transmission window, the second aircraft within a region surrounding the first aircraft;
wherein the radar pulse processing circuit is further to estimate a range from the first aircraft to the second aircraft based on a time delay between the transmission of the radar pulse and the reception of the reflection of the radar pulse.

12. The dual use transponder system of claim 11, wherein the radar pulse processing circuit is further to detect that the second aircraft is within the region surrounding the first aircraft based on an IFF message transmitted by the second aircraft, and to restrict transmissions of the radar pulse to periods of time when the second aircraft is within the region surrounding the first aircraft.

13. The dual use transponder system of claim 11 or claim 12, wherein the message processing circuit is further to display at least one of a warning signal and the estimated range to a pilot of the first aircraft on an operator interface.

14. A computer program product including one or more non-transitory machine-readable mediums encoded with instructions that when executed by one or more processors cause a process to be carried out for aircraft collision avoidance, the process comprising:
causing transmission, by a transponder system of a first aircraft, of a radar pulse during a transmission window associated with the transponder system of the first aircraft, the transmission window associated with a time period between transmission of Identification Friend or Foe (IFF) messages by the transponder system of the first aircraft, wherein a reflection of the radar pulse is received by the transponder system of the first aircraft from a second aircraft during the transmission window; and
estimating a range from the first aircraft to the second aircraft based on a time delay between the transmission of the radar pulse and the reception of the reflection of the radar pulse.

15. The computer program product of claim 14, the process further comprising:
determining that the second aircraft is within a region surrounding the first aircraft based on an IFF message transmitted by the second aircraft; and
restricting transmissions of the radar pulse to periods of time when the second aircraft is within the region surrounding the first aircraft.

16. The computer program product of claim 15, the process further comprising:
causing display of at least one of a warning signal and the estimated range to a pilot of the first aircraft on an operator interface; and/or
causing an evasive maneuver.
